# EUROPÄISCHE PATENTSCHRIFT

(11) **EP 2 454 016 B1**
(45) Veröffentlichungstag und Bekanntmachung des Hinweises auf die Patenterteilung: **17.09.2014**
(21) Anmeldenummer: 10720757.3
(22) Anmeldetag: 17.05.2010
(51) Int. Cl.: B01J 31/08, B01J 37/08, C01B 33/107, C07F 7/12, B01J 41/04, B01J 41/14

(54) **VERFAHREN ZUR BEHANDLUNG VON AMINOFUNKTIONELLEN, POLYMEREN KATALYSATOR-PRÄKURSOREN**
METHOD FOR TREATING POLYMERIC AMINOFUNCTIONALIZED CATALYST PRECURSORS
PROCÉDÉ DE TRAITEMENT DE PRÉCURSEURS DE CATALYSEURS POLYMÈRIQUES ET AMINOFONCTIONALISÉS

(30) Priorität: 15.07.2009 DE 102009027728
(43) Veröffentlichungstag der Anmeldung: 23.05.2012
(73) Patentinhaber: Evonik Degussa GmbH, 45128 Essen (DE)
(72) Erfinder: RAULEDER, Hartwig, 79618 Rheinfelden (DE); MÜH, Ekkehard, 79618 Rheinfelden (DE); SCHORK, Reinhold, 79618 Rheinfelden (DE); SCHÖN, Uwe, 79618 Rheinfelden (DE)
(86) Internationale Anmeldenummer: PCT/EP2010/056701
(87) Internationale Veröffentlichungsnummer: WO 2011/006694

(56) Entgegenhaltungen:
- EP-A2- 0 334 664
- WO-A1-2006/029930
- WO-A1-2010/074301
- DE-A1- 10 057 519
- DE-A1- 10 057 521
- DE-A1-102007 059 170
- US-A- 3 928 542
- US-A- 4 113 845
- US-A- 4 746 752
- LI K Y ET AL: "Redistribution reaction of trichlorosilane in a fixed-bed reactor", INDUSTRIAL & ENGINEERING CHEMISTRY RESEARCH, AMERICAN CHEMICAL SOCIETY, US, Bd. 27, Nr. 9, 1. September 1988 (1988-09-01), Seiten 1600-1606, XP002193567, ISSN: 0888-5885, DOI: DOI:10.1021/IE00081A008

## Beschreibung

Die Erfindung betrifft ein Verfahren zur Behandlung eines stark Wasser enthaltenden aminofunktionellen, polymeren Katalysator-Präkursors unter Beibehaltung seiner inneren porösen Struktur und seiner äußeren sphärischen Form unter Bildung eines Katalysators, indem der Katalysator-Präkursor bei milden Temperaturen und unter Unterdruck behandelt wird und ein Katalysator mit einem Wassergehalt unter 2,5 Gew.-% hergestellt wird. Bevorzugt ist das Verfahren ein großtechnisches Verfahren, insbesondere integriert in ein großtechnisches Verfahren zur Herstellung von Dichlorsilan, Monochlorsilan, Monosilan oder Reinst-Silizium aus Monosilan (SiH₄).

Als besonders wirtschaftliches Verfahren zur Herstellung von Monosilan (SiH₄), Monochlorsilan (ClSiH₃) und auch von Dichlorsilan (DCS, H₂SiCl₂) aus Trichlorsilan (TCS, HSiCl₃) unter Bildung des Koppelprodukts Siliciumtetrachlorid (STC, SiCl₄) hat sich die Dismutierungsreaktion erwiesen. Die Dismutierungsreaktion zur Herstellung von niedrig chlorierten Silanen, wie Monosilan, Monochlorsilan oder Dichlorsilan aus höher chlorierten Silanen, im Allgemeinen Trichlorsilan, wird zur schnelleren Einstellung des chemischen Gleichgewichtes in Gegenwart von Katalysatoren durchgeführt. Dabei erfolgt ein Austausch von Wasserstoff- und Chloratomen zwischen zwei Silanmolekülen in der Regel nach der allgemeinen Reaktionsgleichung (1) in einer so genannten Dismutierungs- oder Disproportionierungsreaktion. Hierbei kann x die Werte 0 bis 3 und y die Werte 1 bis 4 annehmen, mit der Maßgabe, dass das Siliziumatom vierbindig ist.

HₓSiCl₄₋ₓ+HySiCl_{4-y} → Hₓ₊₁SiCl₄₋ₓ₋₁+ H_{y-1}SiCl_{4-y+1} (1)

Üblich ist die Disproportionierung von Trichlorsilan an geeigneten Katalysatoren. Die Mehrzahl der verwendeten Katalysatoren sind sekundäre oder tertiäre Amine oder quartäre Ammoniumsalze.

Entscheidend beim Einsatz der Katalysatoren ist die Vermeidung der Bildung von unerwünschten Nebenprodukten und der Einbringung von Verunreinigungen. Dies gilt um so mehr, wenn aus den Silanen Reinst-Silizium abgeschieden werden soll. In diesem Fall stören bereits Verunreinigungen im ppb bis ppt Bereich (Massenanteil).

Durch Kombination mehrerer, aufeinanderfolgender Reaktionen, wird die Herstellung von Monosilan durch die Dismutierung in drei Schritten - ausgehend von Trichlorsilan zu Dichlorsilan über Monochlorsilan und schließlich zu Monosilan unter Bildung von Siliciumtetrachlorid möglich. Die bestmögliche Integration von Reaktion und Stofftrennung bietet die Reaktivrektifikation. Die Dismutierungsreaktion ist eine vom chemischen Gleichgewicht im Umsatz begrenzte Reaktion, so dass eine Abtrennung von Reaktionsprodukten von den nicht umgesetzten Edukten erforderlich ist, um den Umsatz im Gesamtverfahren schließlich zur Vollständigkeit zu treiben.

Üblicherweise werden käufliche Katalysatoren zur Überführung in ihre aktive Form einer Behandlung unterzogen. Dies kann durch Wasserstoffbegasung oder Änderung der elektronischen Umgebung katalytisch aktiver Zentren, beispielsweise durch Oxidation oder Reduktion erfolgen. Bei Verwendung wasserhaltiger Substanzen als Katalysatoren zur Katalyse wasserempfindlicher Verbindungen wird zur Vermeidung der Hydrolyse das Wasser vorteilhaft entfernt. Auch die Katalysatoraktivität kann in diesen Fällen häufig unter dem Wassergehalt des Systems leiden.

Zur Entfernung des Wassers, das meist stark durch Ausbildung von Wasserstoffbrückenbindungen an den Katalysatoren gebunden ist, wird es üblicherweise durch andere polare aprotische oder polare protische Lösemittel verdrängt. Als Lösemittel kommen meist organische Substanzen, wie Alkohole oder Ketone zum Einsatz, die in nachfolgenden Verfahrensschritten vor der Verwendung des Katalysators meist auch wieder entfernt werden müssen. Derartige Verfahren haben den Nachteil, dass sie viele Verfahrensschritte aufweisen und dadurch langwierig sind. In den genannten Fällen fallen zudem große Mengen an Gemischen der Lösemittel und des verdrängten Wassers an, die aufwendig und kostenträchtig aufgearbeitet werden müssen.

Die DE 100 57 521 A1 offenbart als Katalysator für die Dismutierung ein mit Divinylbenzol vernetztes Polystyrol-Harz mit tertiären Amin-Gruppen, das durch direkte Aminomethylierung eines Styrol-Divinylbenzol-Copolymerisats hergestellt wird. Dieser Katalysator wird zunächst mit hochreinem Wasser gewaschen und danach mit Methanol, insbesondere mit siedendem Methanol. Anschließend wird der Katalysator mittels nicht näher spezifizierten Beheizens, Evakuieren oder Strippen von Methanol-Resten befreit.

Aufgabe der vorliegenden Erfindung war es ein alternatives, ökologischeres Verfahren zur Katalysatorpräparation zu entwickeln, welches die vorstehend genannten Nachteile vermeidet. Besonders bevorzugt soll der so hergestellte Katalysator in Verfahren zur Dismutierung von Halogensilanen höchster Reinheit eingesetzt werden können, insbesondere ohne diese Halogensilane zu zersetzen oder zu verunreinigen.

Gelöst wird die Aufgabe durch ein Verfahren mit den Merkmalen des Anspruchs 1 . Besonders bevorzugte Ausführungsformen sind in den Unteransprüchen und detailliert in der Beschreibung dargelegt.

Überraschend wurde gefunden, dass nach dem erfindungsgemäßen Verfahren selbst poröse, Wasser enthaltende aminofunktionelle, organische, polymere Katalysator-Präkursoren, insbesondere lösemittelfrei, zur Bildung eines Katalysators unter Unterdruck und im Temperaturbereich unter 200 °C, besser unter 150 °C, unter Beibehaltung der Struktur und der katalytischen Aktivität und/oder Aktivierung der katalytischen Aktivität behandelt werden können, insbesondere wird ein im Wesentlichen wasserfreier Katalysator erhalten. Durch die erfindungsgemäße Behandlung bleibt die poröse innere Struktur und/oder die äußere Form der Präkursoren im Katalysator erhalten. Die katalytische Aktivität und Standzeit derart behandelter Katalysatoren eignet sich in hervorragender Weise zur Dismutierung von höheren Halogensilanen in großtechnischem Maßstab.

Generell können alle aminofunktionalisierten Divinylbenzol-Styrol-Copolymere als Katalysator-Präkursor nach dem erfindungsgemäßen Verfahren behandelt werden. Bevorzugt werden dialkylamino- bzw. dialkylaminomethylfunktionalisierte Divinylbenzol-Styrol-Copolymere oder trialkylammonium- bzw. trialkylammoniummethylenfunktionalisierte Divinylbenzol-Styrol-Copolymere nach dem erfindungsgemäßen Verfahren behandelt, um vorzugsweise als Dismutierungskatalysator für Halogensilane geeignet zu sein.

Die nachfolgenden Formeln erläutern idealisiert die Struktur der zuvor genannten funktionalisierten Divinylbenzol-Styrol-Copolymere: 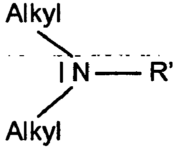 dialkylaminofunktionalisiertes Divinylbenzol-Styrol-Copolymer, 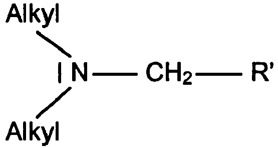 dialkylaminomethylenfunktionalisiertes Divinylbenzol-Styrol-Copolymer, 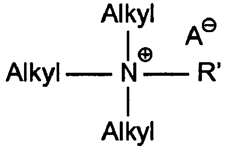 trialkylammoniumfunktionalisertes Divinylbenzol-Styrol-Copolymer
sowie 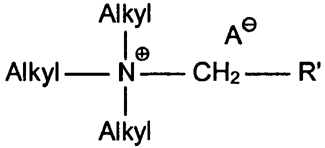 trialkylammoniummethylenfunktionalisiertes Divinylbenzol-Styrol-Copolymer,
wobei R' für einen polymeren Träger, insbesondere mit Divinylbenzol vernetztes Polystyrol, d. h. Divinylbenzol-Styrol-Copolymer, steht, Alkyl unabhängig vorzugsweise für Methyl, Ethyl, n-Propyl, i-Propyl, n-Butyl oder i-Butyl steht und A^{e} unabhängig für ein Anion - beispielsweise, aber nicht ausschließlich - aus der Reihe OH^{e}(Hydroxy), Cl⁻ (Chlorid), CH₃COO⁻ (Acetat) oder HCOO⁻ (Formiat) steht, insbesondere für OH^{e}.

Neben den genannten dimethylaminofunktionalisierten mit Divinylbenzol vernetzten Polystyrol-Harzen können auch weitere mit tertiären und/oder quartären Amino-Gruppen funktionalisierte mit Divinylbenzol vernetzte, poröse Polystyrol-Harze nach dem erfindungsgemäßen Verfahren getrocknet werden. Gleichfalls bevorzugte Katalysator-Präkursoren umfassen Stickstoff enthaltende basische Lewis-Verbindungen, die durch Polymerisation oder Co-Polymerisation mit Amino-, Pyridin-, Pyrazin, Phenazin, Acridin, Chinolin- oder Phenanthrolingruppen und Verbindungen mit hoher spezifischer Oberfläche hergestellt werden, beispielsweise Molekularsiebe, mit Polymeren modifizierte Molekularsiebe oder Vinylharze. Bevorzugt sind mehrfach aminofunktionalisierte poröse, Polymere, insbesondere Vinylpyridinpolymere (Polyvinylpyridine) oder Vinylpyridincopolymere, wie Co-Polymere mit Vinylpryridin und Styrol oder Divinylbenzol. Vorteilhaft überwiegt der Vinylpyridinanteil.

Als besonders geeignet erweist sich das erfindungsgemäße Verfahren für Divinylbenzol vernetzte Polystyrol-Harze mit tertiären Amino-Gruppen als Katalysator-Präkursoren, wie Amberlyst^{®} A 21 ein Ionenaustauscherharz basierend auf Divinylbenzol vernetztem Polystyrol-Harz mit Dimethylaminogruppen am polymeren Rückgrat des Harzes. Gleichfalls kann auf diese Weise ein Amberlyst^{®} A 26 OH, der auf einem quartären trimethylammoniumfunktionalisiertem Divinylbenzol-Styrol-Copolymer basiert und eine stark poröse Struktur aufweist, behandelt werden. Der mittlere Partikeldurchmesser der Katalysatoren liegt üblicherweise bei 0,5 bis 0,6 mm.

Selbst bei Vorhandensein großer Mengen eingeschlossenen flüchtigen oder auch schwer flüchtigen Substanzen, wie Wasser, in den Hohlräumen poröser bis makroporöser Katalysator-Präkursoren (Porendurchmesser größer 200 Angström), wie bei Amberlyst^{®} A 21, können durch Behandlung der Präkursoren unter Unterdruck - synonym Vakuum - und gegebenenfalls einer moderaten Temperaturbehandlung bis unterhalb 200 °C Katalysatoren hergestellt werden. Vorzugsweise wird unterhalb 150 °C behandelt. Die so hergestellten Katalysatoren werden unter Strukturerhaltung d. h. unter Erhalt der inneren und/oder äußeren Struktur bzw. Morphologie und Habitus der zu aktivierenden Katalysator-Präkursoren erhalten.

Es wurde festgestellt, dass eine rein thermische Behandlung der Katalysator-Präkursoren zur im Wesentlichen vollständigen Entfernung schwerflüchtiger Substanzen, wie Wasser, ausscheidet. Die aktiven Zentren sowie die meist verwendeten organischen Trägermaterialien, wie Divinylbenzol-Styrol-Copolymere, der Roh-Katalysatoren oder Katalysator-Präkursoren können nicht ohne strukturelle Veränderungen und/oder Zersetzungen über längere Zeit hohen Temperaturen ausgesetzt werden, wie in den Beispielen dargelegt wird.

Als Katalysator für die Dismutierung von Halogensilanen muss zudem aus sicherheitstechnischen Aspekten, wegen der Entzündlichkeit der Silane, und zur Vermeidung der Verunreinigung der Silane der Kontakt mit Sauerstoff vermieden werden. Durch Kontakt der Silane mit Wasser kann es zudem zu störenden festen Siliziumdioxid Ablagerungen kommen, die die Katalysatoraktivität beeinträchtigen können.

Gegenstand der Erfindung ist daher ein Verfahren zur Behandlung eines Wasser enthaltenden, aminofunktionellen, organischen, polymeren Katalysator-Präkursors, insbesondere lösemittelfreien Katalysator-Präkursors, unter Bildung eines Katalysators, indem der Katalysator-Präkursor unterhalb 200 °C und unter Unterdruck (d. h. einem gegenüber Normaldruck bzw. Umgebungsdruck vermindertem Druck) behandelt wird, wie in Anspruch 1 angegeben. Bevorzugt liegt der Wassergehalt im Bereich von 0,00001 bis 2 Gew.-%. Als organisch ist gemäß der Erfindung ein Katalysator-Präkursor zu verstehen, der zumindest teilweise organische Verbindungen umfasst. Dies sind in der Regel aminofunktionalisierte Polymere oder Co-Polymere.

Dabei ist es besonders bevorzugt, wenn der Wasser enthaltende Katalysator-Präkursor unter einem getrockneten Gas oder Gasgemisch unter Unterdruck behandelt wird. Typischerweise kann Luft oder ein Inertgas eingesetzt werden dessen Restfeuchte vorzugsweise unter 1000 ppm (Massenanteile) liegt. Beispielsweise im Bereich zwischen 1000 ppm bis 0,01 ppt, insbesondere unter 200 ppm, besonders bevorzugt unter 50 ppm, besonders vorzugsweise unter 5 ppm.

Für eine optimale Behandlung der Katalysator-Präkursoren erfolgt die Behandlung unter einem strömendem Gas oder Gasgemisch. Vorzugsweise unter einer Inertgasatmosphäre, insbesondere unter strömender Inertgasatmosphäre unter Unterdruck. Der Gasfluss bzw. Intergasfluss kann vorzugsweise zwischen 0,0001 bis 10 m³/h, bevorzugt zwischen 0,0001 bis 1,5 m³/h betragen, wobei Werte um 0,5 bis 1,25 m3/h großtechnisch zu bevorzugen sind.

Die Erfindung betrifft insbesondere ein Verfahren zur Behandlung eines stark Wasser enthaltenden aminofunktionellen Katalysator-Präkursors unter Beibehaltung seiner inneren und/oder äußeren Struktur, insbesondere der inneren porösen Struktur und seiner äußeren Form, unter Bildung eines Katalysators, indem der Katalysator-Präkursor bei milden Temperaturen und unter Unterdruck behandelt wird und ein im Wesentlichen wasserfreier Katalysator hergestellt wird, insbesondere mit einem Wassergehalt unter 2,5 Gew.-%, vorzugsweise 0,00001 bis 2 Gew.-%. Bevorzugt wird bei unter 100 °C und einem Druck im Bereich von 0,001 bis 100 mbar behandelt, vorzugsweise zwischen 0,001 bis 70 mbar. Die Schwankungsbreite des bestimmbaren Wassergehaltes kann um plus/minus 0,3 Gew.-% liegen.

Der Wassergehalt kann beispielsweise nach Karl-Fischer bestimmt werden (Karl-Fischer Titration, DIN 5 777). Die nach dem erfindungsgemäßen Verfahren einstellbaren Wassergehalte der aminofunktionellen Katalysatoren liegen zweckmäßig zwischen 0, d. h. mit KF nicht detektierbar, und 2,5 Gew.-%, insbesondere zwischen 0,0001 Gew.-% bis 2 Gew.-%, bevorzugt zwischen 0,001 bis 1,8 Gew.-%, besonders bevorzugt zwischen 0,001 bis 1,0 Gew.-%, weiter bevorzugt zwischen 0,001 bis 0,8 Gew.-%, besser zwischen 0,001 bis 0,5 Gew.-%, 0,001 bis 0,4 Gew.-% oder 0,001 bis 0,3 Gew.-%. Gleichzeitig erlaubt die erfindungsgemäße Kombination der Verfahrensschritte den Erhalt der Struktur des Katalysators unter Vermeidung eines Einsatzes organischer Lösemittel.

Bevorzugt ist das Verfahren ein großtechnisches Verfahren, vorzugsweise integriert in oder einem großtechnischen Verfahren zur Herstellung von Dichlorsilan, Silan bis hin zu Solar- oder Halbleitersilizium aus Silanen zugeordnet. In der Regel kann das Verfahren diskontinuierlich im Zyklus der Katalysatorstandzeiten den genannten Verfahren zugeordnet sein.

Ein stark Wasser enthaltender, aminofunktioneller Katalysator-Präkursor enthält in der Regel über 10 Gew.-% Wasser in Bezug auf sein Gesamtgewicht. Der Wassergehalt kann bis zu 60 Gew.-% und darüber betragen, insbesondere der Gehalt eines mit Wasser gewaschenen und gegebenenfalls filtrierten Katalysator-Präkursors. Es kann bevorzugt sein, den Wasser enthaltenden Katalysator-Präkursor vor der Behandlung mit Wasser, insbesondere entsalztem oder deionisierten Wasser, zu waschen. Beispielsweise mittels einer Druckwäsche. Eine Verdrängung des Wassers mit Lösemitteln kann nach dem erfindungsgemäßen Verfahren vorzugsweise unterbleiben.

Gleichfalls kann auch der Wasser enthaltende, aminofunktionelle Katalysator-Präkursor vor der erfindungsgemäßen Behandlung durch Waschen mit Wasser erst gebildet werden. Beispielsweise aus einem Roh-Katalysator der aufgrund seines Verunreinigungsprofils nicht in den Verfahren zur Herstellung oder Dismutierung hochreiner Silane eingesetzt werden kann. Besonders relevant ist dies bei der Dismutierung von Halogensilanen zu geringer halogenierten Silanen oder zu Monosilan, insbesondere als Ausgangsstoffe zur Herstellung von Solar- oder Halbleitersilizium.

Gewaschen wird der Roh-Katalysator für diese Anwendung mit destilliertem, bidestilliertem, bevorzugt mit hochreinem, deionisiertem Wasser und liegt dann als Katalysator-Präkursor vor. Der Wassergehalt des Präkursors kann durch diese Maßnahme deutlich größer 10 Gew.-% in Bezug auf das Gesamtgewicht sein, insbesondere bis zu 80 Gew.-%. In der Regel liegt der Wassergehalt um 30 bis 70 Gew.-%, bevorzugt um 45 bis 60 Gew.-% in Bezug auf das Gesamtgewicht.

Ausgehend von diesem hohen Wassergehalten der Katalysator-Präkursoren ist eine sensible Abstimmung des Trocknungsverfahrens notwendig, um den temperaturempfindlichen, aminofunktionellen Katalysator-Präkursor ohne Zersetzung oder ohne Beeinträchtigung der Katalysatoraktivität im großtechnischen Maßstab zu einem Katalysator zu trocknen, der vorzugsweise zur genannten Disproportionierung geeignet ist. Sehr problematisch sind Zersetzungsreaktionen, Umwandlungen oder Ausblühungen bei der Behandlung der Katalysator-Präkursoren.

Weiter ist es bevorzugt, wenn der mit Wasser gewaschene oder der unbehandelte Katalysator-Präkursor im Wesentlichen lösemittelfrei in das erfindungsgemäße Verfahren eingesetzt wird. Als im Wesentlichen lösemittelfrei gilt der Katalysator-Präkursor, wenn der Präkursor oder der Roh-Katalysator nicht zusätzlich mit einem Lösemittel oder einem Gemisch enthaltend ein Lösemittel, wie einem Alkohol, behandelt wurde.

Nach einer Alternative umfasst ein bevorzugtes Verfahren zur Herstellung des Katalysators die Schritte 1) Waschen eines Katalysator-Präkursors oder eines Roh-Katalysators mit Wasser zur Bildung des Katalysator-Präkursors, insbesondere eines üblichen käuflichen Katalysators, bevorzugt eines aminofunktionellen Katalysators, wobei das Waschen bevorzugt mit destilliertem Wasser, besonders bevorzugt mit hochreinem, deionisiertem Wasser erfolgt; im 2) Schritt wird der Wasser enthaltende Katalysator-Präkursor ohne weitere Behandlung unter Ausbildung des Katalysators durch Anlegen von Unterdruck bzw. Vakuum und gegebenenfalls unter Regulierung der Temperatur hergestellt, insbesondere im Temperaturbereich bis 200 °C; wobei gegebenenfalls in einem 3) Schritt ein Vakuumbrechen mittels Inertgas oder getrockneter Luft erfolgt; und der Katalysator nach Schritt 2) oder 3) erhalten wird. In einem weiteren Schritt kann der Katalysator mit einem Halogensilan zur Dismutierung in Kontakt gebracht werden. Die Regulierung der Temperatur unter anliegendem Vakuum stellt vorzugsweise einen Temperaturbereich zwischen 15 °C bis 200 °C während der Behandlung sicher. Bevorzugt wird der Präkursor unter Vakuum bei erhöhter Temperatur, besonders bevorzugt unterhalb 150 °C behandelt. Gemäß einer Alternative kann das Verfahren auch ohne Schritt 1) durchgeführt werden.

Eine besonders vorteilhafte Ausführungsform des Verfahrens sieht vor, dass der Katalysator durch Behandlung eines aminofunktionellen, porösen und Wasser enthaltenden Katalysator-Präkursors, gegebenenfalls im Wesentlichen unter Erhaltung der inneren und/oder äußeren Struktur, hergestellt wird. Der Wassergehalt des Präkursors kann dabei bis zu 60 Gew.-% betragen. Insbesondere bleibt die poröse Struktur und/oder die äußere Struktur, vorzugsweise die innere und/oder äußere Struktur bzw. Form, insbesondere die Oberfläche des Katalysator-(Präkursors) nach der Entfernung des Wassers im Wesentlichen erhalten.

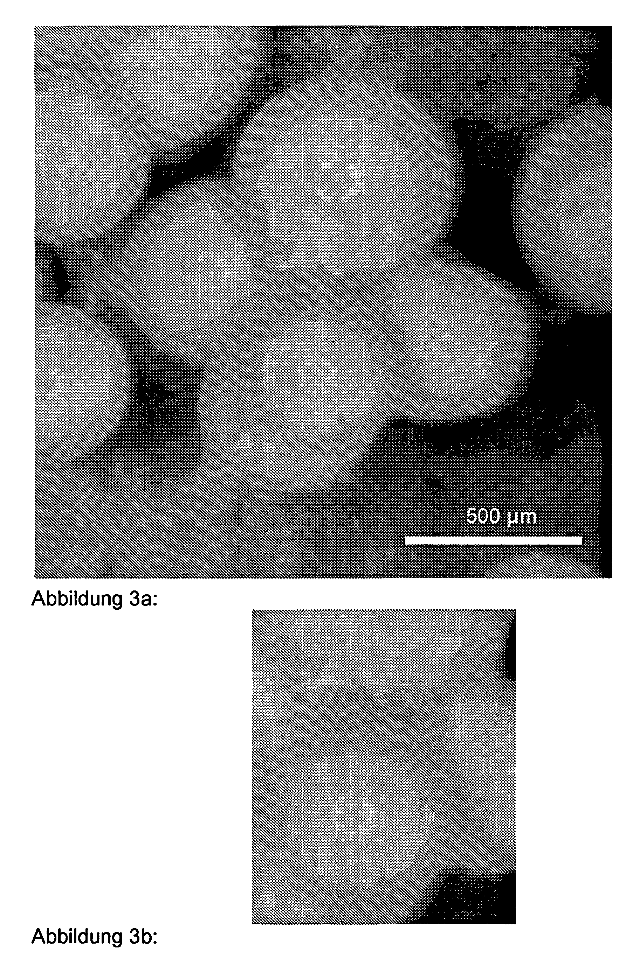

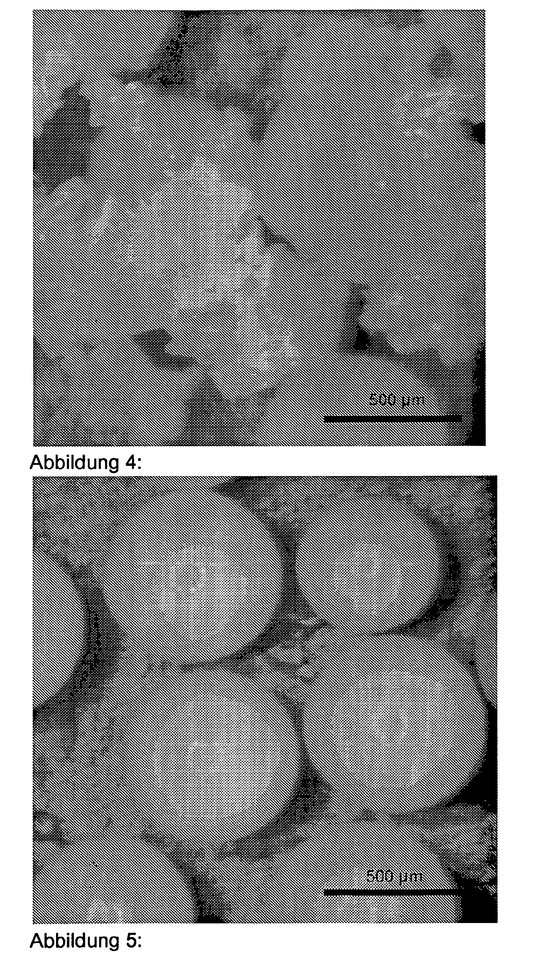

Der Erhalt der Struktur, insbesondere der porösen inneren Struktur und auch der äußeren Form, ist essentiell für die Aktivität des Katalysators und für eine möglichst lange Standzeit im Reaktor. Die Zugänglichkeit der aktiven Zentren muss für die Katalysatoraktivität gewährleistet sein, wie auch eine gute Durch- und Umströmbarkeit mit den umzusetzenden Fluiden, d. h. flüssigen oder gasförmigen Substanzen. Die aktiven Zentren der Katalysatoren bleiben für die umzusetzenden Substanzen zugänglich und aktiv. Ein Zusammenbrechen der Struktur oder eine Zersetzung der temperaturempfindlichen Materialien der Katalysator-Präkursoren ist in jedem Fall zu vermeiden. Bei einer üblichen, rein thermischen Trocknung des Katalysator-Präkursors verändert sich die Struktur bei der Behandlung, insbesondere wurde festgestellt, dass sich die porösen Strukturen mit ausblühenden kristallinen Stoffen zusetzen. Visuell wird dies besonders deutlich an kristallinen Ablagerungen oder generell an Ablagerungen auf der äußeren Oberfläche der partikulären Katalysatoren der Abbildungen 3 und 4 nach rein thermischer Trocknung.

Das Aufheben des Unterdruck bzw. des Vakuums mit Inertgas, insbesondere mit Stickstoff, Argon oder Helium, erlaubt es, den Katalysator im Wesentlichen sauerstofffrei herzustellen. Eine partielle Oxidation der aktiven Zentren kann die katalytische Aktivität beeinträchtigen und stellt, wie eingangs ausgeführt, bei der Herstellung von Monosilan, ein Sicherheitsrisiko dar. Dies gilt insbesondere für Amberlyst^{®} A 21 zur Herstellung des eigentlich verwendbaren Katalysator zur Dismutierung von hochreinen Halogensilanen.

Als hochreine Halogensilane werden jene verstanden, deren Verunreinigungsprofil in Summe aller Verunreinigungen, insbesondere aller so genannten "metallischen" Verunreinigungen, unter 1 ppm bis 0,0001 ppt, bevorzugt 100 ppb bis 0,0001 ppt, besonders bevorzugt 10 ppb bis 0,0001 ppt, besser 1 ppb bis 0,0001 ppt (Masseanteil) beträgt. Generell wird ein derartiges Verunreinigungsprofil für die Elemente Eisen, Bor, Phosphor und Aluminium angestrebt.

Somit umfasst das Verfahren zur Behandlung des Katalysator-Präkursors unter Unterdruck auch ein Vakuumbrechen mittels eines Gases oder Gasgemisches, wie mit getrockneter Luft oder einem Inertgas, Insbesondere mit getrocknetem Inertgas. Gemäß einer Verfahrensvariante kann bereits vor der Einstellung des Unterdrucks der Katalysator-Präkursor unter Inertgas aufbewahrt werden. Vorzugsweise wird ein Inertgasstrom über den Katalysator-Präkursor geleitet und anschließend der Unterdruck eingestellt.

Es hat sich als besonders vorteilhaft erwiesen, wenn der Katalysator-Präkursor, der Katalysator oder das Gemenge beider bei der Behandlung bewegt wird.

Im Anschluss an die erfindungsgemäße Behandlung kann der Katalysator, insbesondere bei Raumtemperatur, mit einem Halogensilan in Kontakt gebracht werden. Erfindungsgemäß ist der nach dem Verfahren hergestellte oder erhältliche Katalysator zur Dismutierung von Wasserstoff und Halogen enthaltenden Siliziumverbindung der allgemeinen Formel I geeignet, insbesondere von hochreinen Halogensilanen, HₙSiₘX₍₂ₘ₊₂₋ₙ₎ (I) wobei X unabhängig von einander Fluor, Chlor, Brom und/oder Jod entspricht und n und m jeweils eine ganze Zahl sind mit 1 ≤ n < (2m + 2) und 1 ≤ m ≤ 12. Bevorzugt ist m gleich 1 oder 2, besonders bevorzugt 1, wobei X Chlor entspricht. Daher ist der Katalysator besonders bevorzugt zur Dismutierung von HSiCl₃, H₂SiCl₂,H₃SiCl oder Gemischen enthaltend mindestens zwei der Verbindungen geeignet.

Die Behandlung des Katalysator-Präkursors erfolgt im Temperaturbereich zwischen -196 °C bis 175 °C, bevorzugt zwischen 15 °C bis 150 °C, besonders bevorzugt zwischen 20 °C bis 135 °C, ganz besonders bevorzugt zwischen 20 °C bis 110 °C, wobei hier der Temperaturbereich von 20 °C bis 95 °C besonders bevorzugt ist. Üblicherweise wird die Behandlung nach dem Einstellen der Temperatur im Temperaturbereich zwischen 60 °C bis 140 °C, insbesondere von 60 °C bis 95 °C, d. h. insbesondere bei 60, 65, 70, 75, 80, 85, 90, 95 °C sowie auch allen jeweils dazwischen liegenden Temperaturwerten durchgeführt, unter Unterdruck und gegebenenfalls unter Bewegung der Katalysator-Präkursoren oder der gebildeten Gemenge aus Katalysator und Präkursor.

Dabei erfolgt die Behandlung unter Unterdruck zwischen 0,001 mbar bis 1012 mbar (mbar absolut). Insbesondere liegt der Unterdruck bei Werten zwischen 0,005 mbar bis 800 mbar, bevorzugt zwischen 0,01 mbar bis 600 mbar, besonders bevorzugt zwischen 0,05 bis 400 mbar, weiter bevorzugt zwischen 0,05 mbar bis 200 mbar, vorteilhafter zwischen 0,05 mbar bis 100 mbar, insbesondere zwischen 0,1 mbar bis 80 mbar, besser zwischen 0,1 mbar bis 50 mbar, noch besser zwischen 0,001 bis 5 mbar. Vorzugsweise wird ein Unterdruck bzw. Vakuum zwischen 50 mbar bis 200 mbar vorzugsweise auf 1 mbar bis 50 mbar bei erhöhter Temperatur, insbesondere bei 15 °C bis 150 °C, besonders bevorzugt zwischen 20 °C bis 150 °C, eingestellt.

Für aminofunktionelle, Wasser enthaltende Katalysator-Präkursoren hat sich eine Behandlung im Temperaturbereich zwischen 80 °C bis 140 °C unter Unterdruck bei 50 mbar bis 200 mbar oder bis 1 mbar als besonders vorteilhaft zur Einstellung eines Wassergehaltes von unter 2 Gew.-%, bevorzugt von unter 0,8 Gew.-% bis unter 0,5 Gew.-%, unter gleichzeitigem Erhalt der Struktur erwiesen. Zudem kann unter diesen Bedingungen die Trocknung großtechnisch in einer akzeptablen Verfahrensdauer erfolgen.

Ein weiterer besonderer Vorteil des erfindungsgemäßen Verfahrens besteht darin, dass es auch großtechnisch unter Erhalt der Struktur der zu aktivierenden Katalysator-Präkursoren eingesetzt werden kann. Vorteilhaft können je Verfahrensansatz 1 kg bis 10 t, insbesondere 1 bis 1.000 kg, bevorzugt 10 bis 500 kg an Katalysator-Präkursor getrocknet werden ohne wesentliche strukturelle Veränderungen oder Zersetzung zu erleiden.

Zur Durchführung des erfindungsgemäßen Verfahrens erfolgt die Behandlung in einer Vorrichtung, umfassend ein Behältnis, insbesondere einen Reaktor, ein Gefäß oder Behälter, mit einer Einrichtung zum Befüllen und gegebenenfalls zum Entleeren der Vorrichtung und einer Einrichtung zum Abführen flüssiger oder gasförmiger Stoffe erfolgen. Mithilfe der Einrichtung zum Befüllen und gegebenenfalls zum Entleeren der Vorrichtung kann der Katalysator-Präkursor eingefüllt werden, die Reaktanden können diskontinuierlich oder kontinuierlich zugegeben werden und später kann der verbrauchte Katalysator entnommen werden. Erfindungsgemäß ist die Vorrichtung geeignet unter den eingangs genannten Unterdrücken, unter Normaldruck oder auch unter Überdruck betrieben zu werden. Zudem ist dem Behälter vorzugsweise eine Heiz- und/oder Kühlvorrichtung zugeordnet. Vorteilhaft ist dem Behälter eine Rührvorrichtung zugeordnet und/oder der Behälter ist rotierbar. Weiter weist die Vorrichtung eine Inertgaszuführung auf. Im Rahmen der Erfindung umfasst die Vorrichtung einen Schaufeltrockner, Filtertrockner oder Reaktor mit Rührwerk, denen ein Vakuumsystem, eine Heiz- und/oder Kühlvorrichtung und Inertgaszuführung zugeordnet sind.

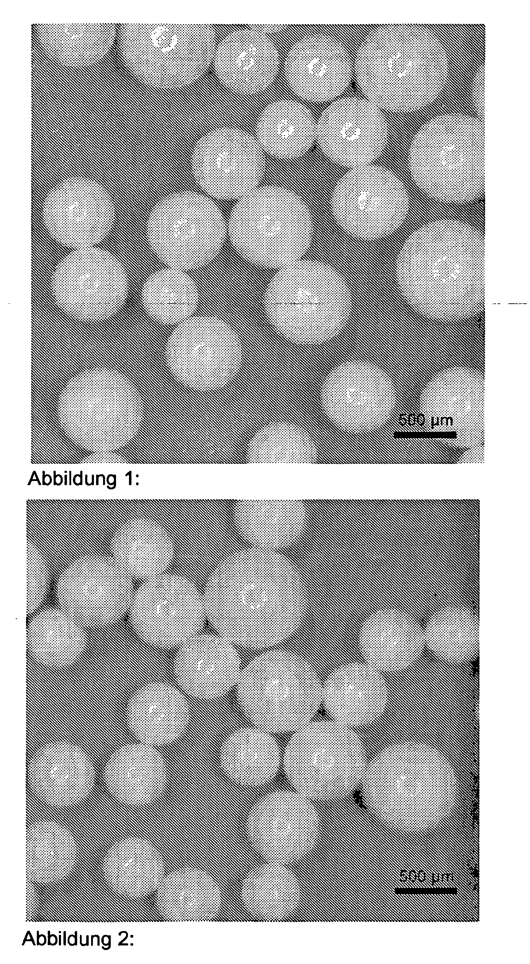

Die nachfolgenden Beispiele erläutern das erfindungsgemäße Verfahren ohne das Verfahren auf diese zu beschränken. Die Abbildungen 1 bis 5 zeigen visuelle Veränderungen des Habitus und der morphologischen Eigenschaften von Amberlyst^{®} A 21 (circa 25 m²/g, mittlerer Porendurchmesser 400 Angström) vor und nach den nachfolgend dargelegten Behandlungsmethoden.
Abbildung 1: Katalysator nach Trocknung für 5 h bei 130 °C und 10 bis 20 mbar (Markierung 500 µm).
Abbildung 2: Ungetrockneter Katalysator (Markierung 500 µm).
Abbildung 3: Katalysator nach Trocknung für 5 h bei 175 °C mit Ausblühungen (Markierung 500 µm).
Abbildung 4: Katalysator nach Trocknung für 5 h bei 250 °C mit kristallinen Ausblühungen (Markierung 500 µm).
Abbildung 5: Ungetrockneter Katalysator (größere Auflösung; Markierung 500 µm).

### Beispielreihe 1

### Beispiel 1.1

80,1 g Amberlyst^{®} A21 (Rohm Haas) mit einem Ausgangswassergehalt von ca. 55 Gew.-% wird in einen 500-ml-Vierhalskolben mit Intensivkühler und Rührer eingewogen. Die Trocknung erfolgt bei ca. 95 °C Sumpftemperatur im Ölbad über 8 h bei einem Druck kleiner < 1 mbar (Drehschieberpumpe). Anschließend wird mit trockenem Stickstoff belüftet und auf Umgebungstemperatur abgekühlt. Der Wassergehalt des getrockneten Katalysators wurde über Karl- Fischer Titration (DIN 51 777) bestimmt und beträgt 0,3 Gew.-%.

Anwendungstechnische Prüfung des Katalysators: 29,1 g des getrockneten Katalysators wurden in einem Kolben mit Kühler und Gasableitung mit 250 ml Trichlorsilan (GC > 99,9 %) überlagert und nach 5 h eine Probe für GC gezogen. Neben Trichlorsilan 87,8 (GC%) liegen Siliziumtetrachlorid sowie die in der Mischung gelösten, leichtflüchtigen Reaktionsprodukte Dichlorsilan und Monochlorsilan vor.

### Vergleichsbeispiel 1.2

Anwendungstechnische Prüfung des unbehandelten Amberlyst^{®} A21 Katalysators mit einem Ausgangswassergehalt von ca. 55 Gew.-%. 1 g des Katalysators wurden in einem Kolben mit Thermometer, Kühler und Gasableitung vorgelegt und über einen 25 ml Tropftrichter 10 ml Siliziumtetrachlorid zudosiert. Es setzte umgehend eine starke Reaktion die mit einer Temperaturerhöhung von 24 auf 37 °C und Bildung von HCl-Nebel einherging ein, bis die Wasseranteile mit dem Siliziumtetrachlorid abreagiert hatten. Eine Untersuchung der Reaktionsmischung zeigte, dass sich verschiedene Siloxane und Kondensationsprodukte bis hin zu Kieselsäureablagerungen gebildet hatten. Der Katalysator in seiner ursprünglichen Form ist für die Umsetzung hydrolyseempfindlicher Substanzen, wie z.B. Trichlorsilan, nicht geeignet.

### Beispielreihe 2

Die gemäß der Beschreibung in den Beispielen 1.1, 3.1, 3.2, 3.3, 4.1, 4.2 und 4.3 hergestellten Katalysatoren wurden auf ihre katalytische Aktivität hin untersucht.

Dazu wurden in einem 250 cm³ Vierhalskolben mit Tropftrichter, Innenthermometer, Septum zur Probenahme und Gasabgang 20 g des jeweiligen Katalysators vorgelegt und im Wasserbad bei 30-31 °C unter ständigen Rühren mittels Magnetrührer schnell 100 g Trichlorsilan (TCS) zugegeben. Nach vorgegebenen Messzeitpunkten wurden über das Septum mit Hilfe einer GC-Spritze Proben entnommen und mittels GC auf die Bildung der Dismutierungsprodukte, insbesondere des schwerflüchtigen Siliziumtetrachlorids (SiCl₄), untersucht.

Die über den Gasabgang entweichenden gasförmigen Produkte (u. a. entstehendes Monosilan) wurden in Natriummethylatlösung eingeleitet.

Die gemäß der Beschreibung 1.1, 3.2, 3.3, 4.1 hergestellten Katalysatoren zeigten allesamt eine vergleichbar hohe Dismutierungsaktivität. Der nach 3.1 hergestellte Katalysator zeigte mittlere Dismutierungsaktivität, die Katalysatoren nach 4.2 und 4.3 zeigten nur noch geringe katalytische Aktivität wobei der Katalysator nach 4.3 die geringste Aktivität aufwies.

### Beispielreihe 3

Allgemeine Durchführung der Versuche: In einem 2-I-Rundkolben wurden 300 g gemäß der in den einzelnen Beispielen beschriebenen Vorgehensweise getrockneter Amberlyst^{®} A 21 Katalysator (ca. 50% des Kolbenvolumens) vorgelegt und dann 1.500 g SiCl₄ innerhalb einer Minute über einen Tropftrichter zugegeben. Der Temperaturverlauf wurde über ein Thermometer verfolgt,

### Vergleichsbeispiel 3.1

1 kg des unbehandelten Amberlyst^{®} A21 Katalysators mit einem Ausgangswassergehalt von ca. 55 Gew.-%. wurde in einem Rotationsverdampfer bei 110 °C bei Umgebungsdruck über 11 Stunden getrocknet. Der Wassergehalt wurde mittels Karl-Fischer Titration-(DIN 51 777) zu 1,7 % bestimmt.

Bei der SiCl₄-Zugabe wurde eine heftige Reaktion beobachtet. Der Kolbeninhalt erwärmte sich begleitet von starker Gasentwicklung und Siedeverzügen sehr stark auf über 110°C.

### Beispiel 3.2

350 kg des unbehandelten Amberlyst^{®} A21 Katalysators mit einem Ausgangswassergehalt von ca. 55 Gew.-% wurde in einem 1 m³ Schaufeltrockner bei 90 °C über 12 Stunden und 20 Umdrehungen/min getrocknet. Dabei wurde über den Trocknerboden trockener Stickstoff mit einem Fluss von 1 m³/h eingeblasen und das Vakuum sukzessive von 60 mbar bis auf kleiner < 1 mbar abgesenkt. Der Wassergehalt wurde mittels Karl-Fischer Titration (DIN 51 777) zu 0,5 % bestimmt. Bei der SiCl₄-Zugabe erwärmte sich der Kolbeninhalt leicht auf max. 40 °C, dabei wurde, nur eine geringe Gasentwicklung beobachtet.

### Beispiel 3.3

350 kg des unbehandelten Amberlyst^{®} A21 Katalysators mit einem Ausgangswassergehalt von ca. 55 Gew.-%. wurde in einem 1-m³-Schaufeltrockner bei 130 °C über 16 Stunden und 20 Umdrehungen/min, getrocknet. Dabei wurde das Volumen über dem zu trocknenden Katalysator mit trockenem Stickstoff mit einem Fluss von 0,5 m³/h überlagert und ein Vakuum von 150 mbar eingestellt. Der Wassergehalt wurde mittels Karl-Fischer Titration (DIN 51 777) zu 0,4 % bestimmt. Bei der SiCl₄-Zugabe erwärmte sich der Kolbeninhalt leicht auf max. 38 °C, dabei wurde nur eine geringe Gasentwicklung beobachtet.

Ergebnis der Untersuchungsreihe 3: Die bei erhöhten Restfeuchtegehalten auftretenden Effekte wie Temperaturerhöhung bis über den Siedepunkt der eingesetzten Chlorsilane sowie Gasentwicklung führen im technischen Maßstab zu großen Problemen, die eine Verwendung der Katalysatoren unmöglich machen bzw. stark einschränken.

### Beispielsreihe 4

### Beispiel 4.1 (illustrativ, nicht gemäß der Erfindung)

Morphologische Untersuchungen: 300 g des unbehandelten Amberlyst^{®} A21 Katalysators mit einem Ausgangswassergehalt von ca. 55 Gew.-% wurde in einem Rotationsverdampfer bei 130 °C bei einem Druck von 20 - 10 mbar über 5 h getrocknet. Der Wassergehalt wurde mittels Karl-Fischer Titration (DIN S1 777) zu 0,5 % bestimmt.

Eine Probe des getrockneten Katalysators wurde mittels Lichtmikroskopie untersucht Abbildung 1 und mit einer ungetrockneten Probe verglichen (Abb. 2). Es ist zu erkennen, dass sich die sphärische visuell sehr glatte Oberfläche der Katalysatorkügelchen bei dieser Trocknungsmethode nicht verändert. Der so getrocknete Katalysator zeigt in Aktivitätstest, siehe Beispielsreihe 2, gute Aktivität.

### Vergleichsbeispiele 4.2 und 4.3

Jeweils 300 g des unbehandelten Amberlyst^{®} A21 Katalysators mit einem Ausgangswassergehalt von ca. 55 Gew.%. wurde in einem Rotationsverdampfer mit

Marlotherm Ölbad bei 175 °C bzw. 250 °C bei Umgebungsdruck über 5 h getrocknet. Der Wassergehalt wurde mittels Karl-Fischer Titration (DIN 51 777) zu 1,5 bzw. 1,2 % bestimmt. Bei der bei 175 °C getrockneten Katalysator-Probe zeigten sich unter dem Lichtmikroskop leichte kristallin erscheinende Ausblühungen (Abb. 3). Die bei 250 °C getrocknete Probe zeigte starke kristalline Ausblühungen (Abb. 4). sowie eine zunehmende Braunfärbung der ansonsten gelblichen Kügelchen. Abbildung 5 zeigt zum Vergleich die Aufnahme einer ungetrockneten Probe in passender Vergrößerung.

Im Vergleich zu dem bei 130 °C und 20 bis 10 mbar getrockneten Katalysator zeigten die bei hohen Temperaturen getrockneten Katalysatoren geringere Aktivität, wobei der bei 250 °C getrocknete Katalysator die geringste Aktivität zeigt.

## Patentansprüche

1. Verfahren zur Behandlung eines Wasser enthaltenden, aminofunktionellen, polymeren, organischen Katalysator-Präkursors unter Bildung eines Katalysators, indem der Katalysator-Präkursor unterhalb 200 °C und unter Unterdruck behandelt wird und ein Katalysator mit einem Wassergehalt unter 2,5 Gew.-% erhalten wird, wobei die Behandlung im Temperaturbereich zwischen -196 °C bis 175 °C erfolgt, der Unterdruck 0,001 mbar bis 1012 mbar beträgt und die Behandlung in einer Vorrichtung erfolgt, umfassend ein Behältnis mit einer Einrichtung zum Befüllen und gegebenenfalls zum Entleeren der Vorrichtung und einer Einrichtung zum Abführen flüssiger oder gasförmiger Stoffe, wobei die Vorrichtung einen Schaufeltrockner, Filtertrockner oder Reaktor mit Rührwerk umfasst, denen ein Vakuumsystem, eine Heiz- und/oder Kühlvorrichtung und Inertgaszuführung zugeordnet sind.

2. Verfahren nach Anspruch 1,
**dadurch gekennzeichnet,**
**dass** der Wasser enthaltende Katalysator-Präkursor mit einem getrockneten Gas oder Gasgemisch unter Unterdruck behandelt wird.

3. Verfahren nach Anspruch 1 oder 2,
**dadurch gekennzeichnet,**
**dass** der Katalysator-Präkursor im Wesentlichen lösemittelfrei ist.

4. Verfahren nach einem der Ansprüche 1 bis 3,
**dadurch gekennzeichnet,**
**dass** die Behandlung des Katalysator-Präkursors unter Unterdruck und Vakuumbrechen mittels Inertgas, Luft oder eines Gemisches dieser erfolgt.

5. Verfahren nach einem der Ansprüche 1 bis 4,
**dadurch gekennzeichnet,**
**dass** der Katalysator-Präkursor, der Katalysator oder das Gemenge beider bei der Behandlung bewegt wird.

6. Verfahren nach einem der Ansprüche 1 bis 5,
**dadurch gekennzeichnet,**
**dass** der Katalysator durch Behandlung eines aminofunktionellen, porösen und Wasser enthaltenden Katalysator-Präkursors hergestellt wird, der ein tertiäresaminofunktionelles Divinylbenzol-Styrol-Copolymer oder ein quartäresammoniumfunktionelles Divinylbenzol-Stryrol-Copolymer umfasst.

7. Verfahren nach einem der Ansprüche 1 bis 6,
**dadurch gekennzeichnet,**
**dass** der Katalysator aus dem Wasser enthaltenden Katalysator-Präkursor im Wesentlichen unter Erhaltung der inneren und/oder äußeren Struktur hergestellt wird.

8. Verfahren nach einem der Ansprüche 1 bis 7,
**dadurch gekennzeichnet,**
**dass** es die Schritte
1) Waschen eines Roh-Katalysator mit Wasser zur Bildung des Katalysator-Präkursors,
2) Behandlung des Katalysator-Präkursors unter Unterdruck und bei erhöhter Temperatur unterhalb 200 °C; und gegebenenfalls
3) Vakuumbrechen mittels Inertgas
umfasst.

9. Verfahren nach einem der Ansprüche 1 bis 8,
**dadurch gekennzeichnet,**
**dass** der Katalysator zur Dismutierung von HSiCl₃, H₂SiCl₂, H₃SiCl oder Gemischen enthaltend mindestens zwei der Verbindungen geeignet ist.

10. Verfahren nach einem der Ansprüche 1 bis 9,
**dadurch gekennzeichnet,**
**dass** der Behälter einer Heiz- und/oder Kühlvorrichtung zugeordnet ist.

11. Verfahren nach einem der Ansprüche 1 bis 10,
**dadurch gekennzeichnet,**
**dass** die Vorrichtung geeignet ist bei Überdruck (> 1013 mbar), Normaldruck und Unterdruck betrieben zu werden.

12. Verfahren nach einem der Ansprüche 10 oder 11,
**dadurch gekennzeichnet,**
**dass** dem Behälter eine Rührvorrichtung zugeordnet ist und/oder der Behälter rotierbar ist.

## Claims

1. Process for treating a water-containing, amino-functional, polymeric, organic catalyst precursor to form a catalyst, by treating the catalyst precursor below 200°C and under reduced pressure to obtain a catalyst having a water content below 2.5% by weight, wherein the treatment is effected in the temperature range from -196°C to 175°C, the reduced pressure is 0.001 mbar to 1012 mbar and the treatment is effected in apparatus comprising a vessel having a device for charging and optionally for emptying the apparatus, and a device for removing liquid or gaseous substances, wherein the apparatus comprises a paddle dryer, filter dryer or stirred reactor assigned a vacuum system, a heating and/or cooling apparatus and inert gas supply.

2. Process according to Claim 1,
**characterized in that**
the water-containing catalyst precursor is treated with a dried gas or gas mixture under reduced pressure.

3. Process according to Claim 1 or 2,
**characterized in that**
the catalyst precursor is substantially solvent-free.

4. Process according to any one of Claims 1 to 3,
**characterized in that**
the catalyst precursor is treated under reduced pressure to break the vacuum by means of inert gas,
air or a mixture thereof.

5. Process according to any one of Claims 1 to 4,
**characterized in that**
the catalyst precursor, the catalyst or the mixture of the two is agitated in the course of treatment.

6. Process according to any one of Claims 1 to 5,
**characterized in that**
the catalyst is prepared by treatment of an amino-functional, porous and water-containing catalyst precursor comprising a tert-amino-functional divinylbenzene-styrene copolymer or a quaternary-ammonium-functional divinylbenzene-styrene copolymer.

7. Process according to any one of Claims 1 to 6,
**characterized in that**
the catalyst is prepared from the water-containing catalyst precursor substantially with retention of the inner and/or outer structure.

8. Process according to any one of Claims 1 to 7,
**characterized in that**
it comprises the steps of
1) washing a crude catalyst with water to form the catalyst precursor,
2) treating the catalyst precursor under reduced pressure and at elevated temperature below 200°C; and optionally
3) breaking the vacuum by means of inert gas.

9. Process according to any one of Claims 1 to 8,
**characterized in that**
the catalyst is suitable for dismutating HSiCl₃, H₂SiCl₂, H₃SiCl or mixtures containing at least two of the compounds.

10. Process according to any one of Claims 1 to 9,
**characterized in that** the vessel is assigned a heating and/or cooling apparatus.

11. Process according to any one of Claims 1 to 10,
**characterized in that**
the apparatus is suitable for operation under elevated pressure (> 1013 mbar), standard pressure and reduced pressure.

12. Process according to either of Claims 10 and 11,
**characterized in that**
the vessel is assigned a stirrer apparatus and/or is rotatable.

## Revendications

1. Procédé de traitement d'un précurseur de catalyseur organique, polymère, à fonction amino, contenant de l'eau, avec formation d'un catalyseur, selon lequel le précurseur de catalyseur est traité à une température inférieure à 200 °C et sous une sous-pression, et un catalyseur ayant une teneur en eau inférieure à 2,5 % en poids est obtenu, le traitement ayant lieu dans la plage de températures allant de - 196 °C à 175 °C, la sous-pression étant de 0,001 mbar à 1 012 mbar, et le traitement ayant lieu dans un dispositif qui comprend un contenant muni d'une unité pour le remplissage et éventuellement le vidage du dispositif et d'une unité pour le déchargement de matières liquides ou gazeuses, le dispositif comprenant un séchoir à barbotage, un séchoir à filtre ou un réacteur à agitateur, auxquels sont attribués un système de vide, un dispositif de chauffage et/ou de refroidissement et une alimentation de gaz inerte.

2. Procédé selon la revendication 1, **caractérisé en ce que** le précurseur de catalyseur contenant de l'eau est traité avec un gaz ou mélange de gaz séché sous une sous-pression.

3. Procédé selon la revendication 1 ou 2, **caractérisé en ce que** le précurseur de catalyseur est essentiellement exempt de solvant.

4. Procédé selon l'une quelconque des revendications 1 à 3, **caractérisé en ce que** le traitement du précurseur de catalyseur a lieu sous une sous-pression et une rupture du vide avec un gaz inerte, de l'air ou un mélange de ceux-ci.

5. Procédé selon l'une quelconque des revendications 1 à 4, **caractérisé en ce que** le précurseur de catalyseur, le catalyseur ou le mélange des deux est déplacé pendant le traitement.

6. Procédé selon l'une quelconque des revendications 1 à 5, **caractérisé en ce que** le catalyseur est fabriqué par traitement d'un précurseur de catalyseur à fonction amino, poreux et contenant de l'eau, qui comprend un copolymère de divinylbenzène-styrène à fonction amino tertiaire ou un copolymère de vinylbenzène-styrène à fonction ammonium quaternaire.

7. Procédé selon l'une quelconque des revendications 1 à 6, **caractérisé en ce que** le catalyseur est fabriqué à partir du précurseur de catalyseur contenant de l'eau avec maintien essentiel de la structure intérieure et/ou extérieure.

8. Procédé selon l'une quelconque des revendications 1 à 7, **caractérisé en ce qu'**il comprend les étapes suivantes :
1) le lavage d'un catalyseur brut avec de l'eau pour former le précurseur de catalyseur,
2) le traitement du précurseur de catalyseur sous une sous-pression et à une température élevée inférieure à 200 °C ; et éventuellement
3) la rupture du vide avec un gaz inerte.

9. Procédé selon l'une quelconque des revendications 1 à 8, **caractérisé en ce que** le catalyseur est approprié pour la dismutation d'HSiCl₃, H₂SiCl₂, H₃SiCl ou de mélanges contenant au moins deux des composés.

10. Procédé selon l'une quelconque des revendications 1 à 9, **caractérisé en ce qu'**un dispositif de chauffage et/ou de refroidissement est attribué au contenant.

11. Procédé selon l'une quelconque des revendications 1 à 10, **caractérisé en ce que** le dispositif est approprié pour une exploitation sous une surpression (> 1 013 mbar), sous la pression normale et sous une sous-pression.

12. Procédé selon l'une quelconque des revendications 10 ou 11, **caractérisé en ce qu'**un dispositif d'agitation est attribué au contenant et/ou le contenant est rotatif.
